# EUROPEAN PATENT APPLICATION

(11) **EP 3 474 490 A1**
(43) Date of publication of application: **24.04.2019**
(21) Application number: 17812549.8
(22) Date of filing: 27.05.2017
(51) Int. Cl.: H04L 12/24, H04L 29/12

(54) **SERVICE ACTIVATING METHOD, DEVICE AND SYSTEM, AND STORAGE MEDIUM**

(30) Priority: 17.06.2016 CN 201610437932
(71) Applicant: ZTE Corporation, Shenzhen, Guangdong 518057 (CN)
(72) Inventor: JI, Hangui, Shenzhen Guangdong 518057 (CN); HE, Feng, Shenzhen Guangdong 518057 (CN)
(74) Representative: Petit, Maxime
(86) International application number: PCT/CN2017/086263
(87) International publication number: WO 2017/215438

(57) **Abstract**

According to a service activating method and system, an optical line terminal, an optical network unit and a storage medium provided in the embodiments of the present disclosure, the method comprises: acquiring at least one service to be activated of the optical network unit; encapsulating the service parameter corresponding to the at least one of service to be activated into an extended service configuration message; and sending the extended service configuration message to the optical network unit. In this way, the service activating time is shortened, and the service activating efficiency is improved.

## Description

### CROSS-REFERENCE TO RELATED APPLICATIONS

This application claims a priority of Chinese patent application No. 201610437932.1, filed on June 17, 2016, the entire disclosure of which is hereby incorporated by reference..

### FIELD OF THE INVENTION

The present disclosure relates to the field of communications, and in particular, to a service activating method, device and system, and a storage medium.

### BACKGROUND

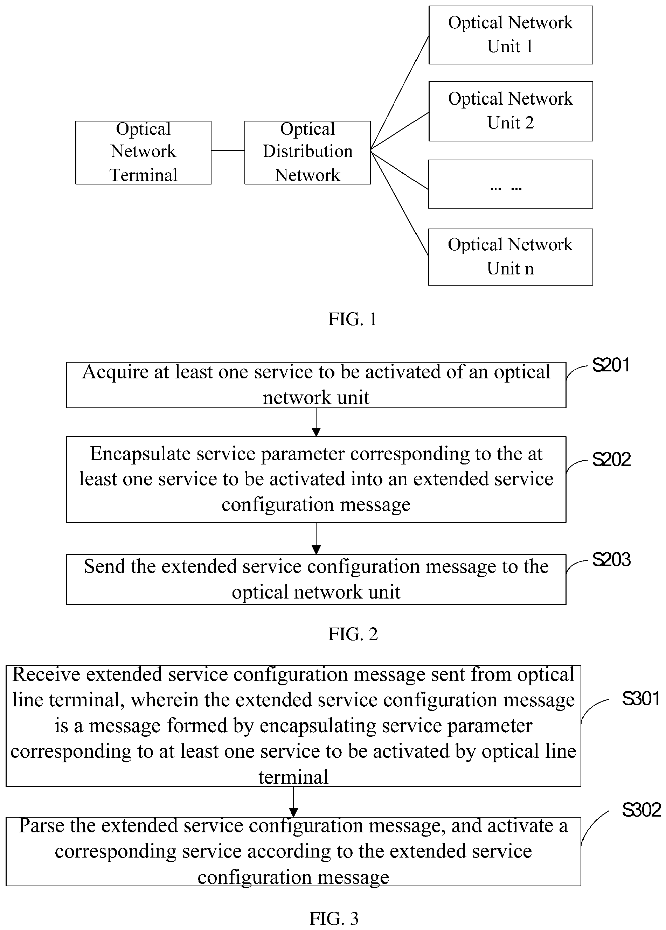

GPON (Gigabit-Capable PON, broadband passive optical integrated access standard based on ITU-TG.984.x standard) network is a point-to-multipoint network. The structure of the GPON system, as shown in FIG. 1, includes an OLT (Optical Line Terminal) at a center side, an ODN (Optical Distribution Network), and ONUs (Optical Network Unit) at a client side. In the GPON system, the OLT performs configuration management on the ONU through an OMCI (ONU Management and Control Interface) protocol, and the management carrier is an OMCI message. In the related art, when a service is activated, the OLT is usually required to send tens (or even more) of OMCI messages to the ONU, and after the first OMCI message is sent, the next OMCI message of the service will be delivered upon the receipt of a response message returned from the ONU.

In recent years, with the rapid growth of various types of network applications and the increasing requirements of users for network service levels, the service scenarios are becoming more and more complex, and the OMCI messages of the OLT for performing the configuration management on the ONUs are getting more and more. The above way of transmitting the OMCI message to activate a service causes the service to be activated for a long time with a complicated process, which may lower the efficiency of the service activation. Therefore, there is a need for a more efficient way to activate the service.

### SUMMARY

Embodiments of the disclosure provide a service activating method, device and system, and a storage medium mainly to address the technical problem to improve the efficiency of activating the service.

In order to address the above technical problem, an embodiment of the disclosure provides a service activating method, comprising: acquiring at least one service to be activated of an optical network unit; encapsulating service parameter corresponding to the at least one service to be activated into an extended service configuration message; and sending the extended service configuration message to the optical network unit.

An embodiment of the disclosure provides a service activating method, comprising: receiving an extended service configuration message sent from an optical line terminal, wherein the extended service configuration message is a message formed by encapsulating service parameter corresponding to at least one service to be activated by the optical line terminal; and parsing the extended service configuration message, and activating a corresponding service according to the extended service configuration message.

An embodiment of the disclosure provides an optical line terminal, comprising: an acquisition module, configured to acquire at least one service to be activated of an optical network unit; an extended service configuration message generating module, configured to encapsulate service parameter corresponding to the at least one service to be activated into an extended service configuration message; and a sending module, configured to send the extended service configuration message to the optical network unit.

An embodiment of the disclosure provides an optical network unit, comprising: a receiving module, configured to receive an extended service configuration message sent from an optical line terminal, wherein the extended service configuration message is a message formed by encapsulating service parameter corresponding to at least one service to be activated by the optical line terminal; and a processing module, configured to parse the extended service configuration message, and configure the service according to the extended service configuration message.

An embodiment of the disclosure provides a service activating system, comprising the optical line terminal and the optical network unit as set forth.

An embodiment of the disclosure also provides a computer storage medium in which a computer executable instruction is stored, the computer executable instruction being configured to execute any one of the service activating methods as set forth.

An embodiment of the disclosure also provides an optical line terminal, comprising: a processor and a memory for storing a computer program executable on the processor, wherein the processor is configured to execute the steps of the method as set forth when the computer program is operated.

An optical network unit comprises: a processor and a memory for storing a computer program executable on the processor, wherein the processor is configured to execute the steps of the method as set forth when the computer program is operated.

The beneficial effects of the present disclosure are:

According to the service activating method and system, the optical line terminal and the optical network unit, and the computer storage medium provided in the embodiments of the present disclosure, at least one service to be activated of the optical network unit is acquired; the service parameter corresponding to the at least one service to be activated are encapsulated into an extended service configuration message; and the extended service configuration message is sent to the optical network unit. In other words, all the service parameters required for activating at least one of services to be activated are encapsulated in the extended service configuration message to be sent to the optical network unit to activate the service, such that the optical network unit can complete the activation of at least one service according to one piece of extended service configuration message. Compared to the service activation in the related art in which the service parameters of a service are divided into multiple messages and sent to the optical network unit to activate the service such that the service activating time is prolonged while the efficiency is lowered, the disclosure can shorten the service activating time and improve the efficiency of activating service.

### BRIEF DESCRIPTION OF THE DRAWINGS

FIG. 1 is a schematic diagram showing a structural of a GPON system according to embodiments of the present disclosure;
FIG. 2 is a flowchart of a service activating method according to a first embodiment 1 of the present disclosure;
FIG. 3 is a flowchart of a service activating method according to a second embodiment of the present disclosure;
FIG. 4 is a flowchart of a service activating method according to a third embodiment of the present disclosure;
FIG. 5 is a schematic diagram showing an optical line terminal according to a fourth embodiment of the present disclosure;
FIG. 6 is a schematic diagram showing an optical network unit according to the fourth embodiment of the present disclosure; and
FIG. 7 is a schematic diagram showing a service activating system according to the fourth embodiment of the present disclosure.

### DETAILED DESCRIPTION OF THE EMBODIMENTS

The embodiments of the present disclosure are further described in detail below with reference to the accompanying drawings.

### First Embodiment

In order to improve service activating efficiency, this embodiment provides a service activating method, with reference to FIG. 2, specifically including:

Step S201, acquiring at least one service to be activated of an optical network unit.

Specifically, when a user needs to activate a service, the OLT is first required to determine the type of the service to be activated for a user. In other words, the service to be activated of the ONU corresponding to the user is necessarily acquired at first, so as to configure corresponding service parameters for the service to be activated of the ONU.

In a specific implementation, the step of acquiring the to-be-activated service of the optical network unit includes: establishing communication with the optical network unit; acquiring identification information of the optical network unit; and determining the to-be-activated service of the optical network unit according to the identification information.

Specifically, the to-be-activated service of the optical network unit may be acquired in such a way that the OLT first establishes communication with the ONU, then sends an acquisition request to the ONU to actively acquire the identification information of the ONU from the ONU or may receive the identification information actively sent from the ONU to determine the to-be-activated service of the ONU according to the identification information. The identification information may be SN (Serial Number) information and MAC (Media Access Control) address information of the ONU, or may be other feature information of the ONU; the service may be a video telephone service, a television service, or the like. In addition, during the acquisition of the to-be-activated service of the optical network unit, a network management operator at the OLT side may determine the to-be-activated service of the ONU corresponding to the user according to the user information. In addition to the above means, the OLT may acquire the information of the to-be-activated service of the ONU in other manners which is not limited in this embodiment. In addition, the establishment of communication between the OLT and the ONU may further include establishing an OMCI channel therebetween, and the OLT may communicate with the ONU through the OMCI channel to acquire the identification information of the ONU. As a matter of course, the identification information may also be acquired through other channels. The OMCI channel may also be used for the subsequent transmission of the extended service configuration message which is an extended OMCI service configuration message.

Step S202, encapsulating service parameter corresponding to the at least one service to be activated into an extended service configuration message.

In the related art, during the activation of the service, the OLT divides the service parameters of the service into multiple OMCI messages and sends them to the ONU successively, and the OLT must send the next OMCI message of the service to the ONU upon the receipt of the response message from the ONU. If the response message is not received, the next OMCI message will not be sent. Thus, the service activating time is prolonged, and the service parameters of the service are sent to the ONU multiple times. After it is received by the ONU, all the service parameters are required to complete the service. In this way, the service activating logic becomes complicated. Therefore, in order to improve the service activating efficiency and simplify the service activating process, according to the service activating method in this embodiment, all the service parameters of the at least one of the to-be-activated services are encapsulated into a piece of extended service configuration message to be sent to the ONU, such that the ONU can acquire all the service parameters required for activating at least one of the services at a time and then perform the corresponding service configuration to activate the service. In this way, the activating time of the service can be greatly shortened to improve the efficiency of the activating the service. In addition, the extended service configuration message is an Extended OMCI message. Compared to the service parameters transmitted through the basic OMCI message in the related art, since the service parameters according to this embodiment occupy a number of bytes, the service parameters according to this embodiment may be transmitted through the Extended OMCI message supporting an ultra-long format. In other words, all service parameters of at least one service are carried in the Extended OMCI message and transmitted through the Extended OMCI message, such that the OLT can send the extended service configuration message including all the service parameters of at least one service to be activated to the ONU.

In a specific implementation, the service parameters required to activate at least one of services to be activated are directly packaged and encapsulated in an extended service configuration message; or a service configuration message is generated according to the service parameters corresponding to the service to be activated, and then the service configuration message required to activate at least one of services to be activated is packaged and encapsulated in the extended service configuration message.

Specifically, for a to-be-activated service corresponding to one or more service parameters, the service parameters of the to-be-activated service are encapsulated into an extended service configuration message, wherein all the service parameters required for the to-be-activated service may are directly packaged and encapsulated in an extended service configuration message. The service parameter refers to configuration information for configuring the to-be-activated service, and specifically may include a service type identifier, port information, service label information, a logical channel identifier, bandwidth allocation parameter, and the traffic scheduling information, for example. In addition, the service parameters may also be configuration information in other forms. Information may be referred to as a service parameter of the service as long as it indicates the feature of to-be-activated service or the information of the to-be-activated service. In addition, for a to-be-activated service, the service parameters thereof may be formed into a plurality of basic OMCI messages, and then all basic OMCI messages of the service are successively packaged and encapsulated in an extended service configuration message, which is an extended OMCI service configuration message.

In a specific implementation, a service type of the service to be activated is analyzed, and in accordance with the service type, the service parameters corresponding to the service to be activated are encapsulated into at least one of extended service configuration messages according to a preset rule. In other words, all the service parameters of the to-be-activated service may be encapsulated into an extended service configuration message; or all the service parameters of the two or more to-be-activated services may be encapsulated into an extended service configuration message in accordance with the service type.

Specifically, the extended service configuration message may include the configuration information of only one to-be-activated service, or may include the service parameters of two or more to-be-activated service, which may be determined according to the number of services to be activated and the bytes occupied by the service parameters corresponding to each service to be activated. For example, if there are a plenty of service parameters of a to-be-activated service, that is, if the large number of bytes are occupied by the service, all the service parameters of the service can be carried only in an extended service configuration message; and if there are less service parameters in the service to be activated with less bytes occupied by the service or some services having relevance are activated, all the service parameters of the services can be carried in an extended service configuration message. When an extended service configuration message contains service parameters of multiple services, the service parameters may be encapsulated according to the service type. In other words, the service parameters of two or more services may be placed in an extension field according to the service type. In addition, the service parameters are encapsulated in the extended OMCI service configuration message, and specifically may be encapsulated in a Message contents domain of the extended OMCI service configuration message. The extended OMCI service configuration message may, in principle, contain at least one to-be-activated service. If the configuration information cannot be contained, the service to be activated can be divided into two or more to-be-activated sub-services as desired, and the configuration information of the to-be-activated sub-services can be encapsulated and sent in an extended OMCI service configuration message.

Step S203, sending the extended service configuration message to the optical network unit.

Specifically, after the extended service configuration message for activating the ONU service is generated, the extended service configuration message is sent to the ONU to enable the service to be activated through the ONU.

In a specific implementation, the step of sending the extended service configuration message to the optical network unit includes: sending a first extended service configuration message to the optical network unit, and sending a second extended service configuration message to the optical network unit after a response message to the first extended service configuration message returned from the optical network unit is received.

Specifically, the first extended service configuration information and the second extended service message used herein refer to the extended service configuration messages having an order of sending time. That is, the extended service configuration message initially sent is the first extended service configuration information and the extended service configuration message lastly sent is the second extended service message, wherein the first extended service configuration information and the second extended service message may be only a single extended service configuration message, or may be two or more extended service configuration messages. When the OLT sends the extended service configuration message to the ONU, the extended service configuration messages may be sent to the ONU one by one according to the generation timing of the extended service configuration messages or the logical relationship between the services to be activated. Alternatively, the extended service configuration messages of associated services to be activated may be sent to the ONU together, such that the ONU can activate the service more conveniently and quickly. It is to be understood that after the first piece of extended service configuration message or the first batch of extended service configuration messages are sent, in order to avoid the error of the extended service configuration message and thus affect the subsequent service activating, the OLT will send the next or next batch of the extended service configuration message once it receives the response message sent from the ONU to ensure that the extended service configuration message previously sent is allowed appropriately to activate the service. This process could be repeated until the extended service configuration messages corresponding to all the to-be-activated services are sent, so as to guarantee the normal activation of the service and the stability of the system. In addition, the OLT may also send the extended service configuration message corresponding to all the to-be-activated services of the ONU to the ONU to complete the transmission of the service parameters of the ONU at one time. Then the OLT receives the response message returned from the ONU in relation to the completion of the receipt of the extended service configuration message, such that subsequently the ONU is allow to successively activate services according to the received extended service configuration messages, thereby greatly lowering the transmission time of the extended service configuration messages and improving the service activating efficiency.

The service activating method according to the embodiment of the present disclosure may include: acquiring at least one service to be activated of an optical network unit; encapsulating service parameter corresponding to the at least one service to be activated into an extended service configuration message; and sending the extended service configuration message to the optical network unit. In other words, all the service parameters required for activating at least one of services to be activated are encapsulated in the extended service configuration message to be sent to the optical network unit to activate the service, such that the optical network unit can complete the activation of at least one service according to one piece of extended service configuration message. Compared to the service activation in the related art in which the service parameters of a service are divided into multiple messages and sent to the optical network unit to activate the service such that the service activating time is prolonged while the efficiency is lowered, this embodiment can shorten the service activating time and improve the efficiency of activating service.

### Second Embodiment

This embodiment provides a service activating method, with reference to FIG. 3, specifically including:

Step S301, receiving an extended service configuration message sent from an optical line terminal, wherein the extended service configuration message is a message formed by encapsulating service parameter corresponding to at least one service to be activated by the optical line terminal.

Specifically, OLT may send the extended service configuration message to the ONU after the generation of the extended service configuration message, and the ONU may receive the extended service configuration message sent from the OLT. The extended service configuration message includes all the service parameters of at least one of the to-be-activated services. In other words, the ONU may acquire the extended service configuration message required for activating at least one service to be activated at a time, and then may activate at least one service according to the extended service configuration message, thereby greatly shortening the service activating time and improves the efficiency of activating service. In addition, compared to the service parameters transmitted through the basic OMCI message in the related art, since the service parameters according to this embodiment occupy a number of bytes, the service parameters according to this embodiment may be transmitted through the Extended OMCI message supporting an ultra-long format. In other words, all service parameters of at least one service are carried in the Extended OMCI message and transmitted through the Extended OMCI message, such that the OLT can send the extended service configuration message including all the service parameters of at least one service to be activated to the ONU.

It should be understood that upon the receipt of each of the extended service configuration messages, the ONU needs to perform a preliminary verification to determine whether it is correct or can be used for service activating. If the verification passes, the ONU may send the response message to the OLT such that the OLT is informed to send the next or next batch of extended service configuration messages. This ensures that when the extended service configuration message is incorrect or cannot be used for service activating, the OLT does not continuously send the extended service configuration messages to avoid waste of the extended service configuration message and communication resources or a problem of unstable system.

In a specific implementation, prior to the receipet of the extended service configuration message sent from the optical line terminal, the method further includes: establishing communication with the optical line terminal, and reporting its identification information to the optical line terminal.

Specifically, prior to the receipt of the extended service configuration message sent from the OLT, the ONU needs to establish communication with the OLT, and then report the identification information thereof to the OLT according to the communication. The identification information may be the SN information and the MAC address of the ONU or may also be other feature information of the ONU. The identification information may be reported to the OLT upon the receipt of the acquisition request from the OLT, or may be directly reported to the OLT after the communication is established in order for the OLT to determine the service to be activated. In addition, the step of establishing communication between the OLT and the ONU may further include establishing an OMCI channel therebetween, such that the ONU may communicate with the OLT through the OMCI channel to transmit the identification information. As a matter of course, the identification information may also be transmitted through other channels. The OMCI channel may also be used for the subsequent transmission of the extended service configuration messages. Further, the communication between the ONU and the OLT can be established by connecting the ONU to an optical fiber and then energizing to send a communication request to the OLT. Thereby the communication therebetween can be established, and then the OMCI channel can be established.

Step S302, parsing the extended service configuration message, and activating a corresponding service according to the extended service configuration message.

Specifically, upon the receipt of the extended service configuration message, the ONU first verifies whether the extended service configuration message is correct or can be used for the service activating. If the extended service configuration message is correct or can be used for the service activating after the verification, the extended service configuration message will be further parsed to activate a corresponding to-be-activated service according to the service parameters.

The service activating method according to the embodiment of the present disclosure may include: receiving an extended service configuration message sent from an OLT, wherein the extended service configuration message includes all the service parameters required for activating at least one service to be activated; and parsing the extended service configuration message and activating a corresponding service according to the extended service configuration message. In other words, the ONU can at least acquire all the extended service configuration messages required for activating one of services to be activated at one time and then activate the service through the extended service configuration messages. Compared to the method in the related art in which the service configuration messages are necessarily acquired many times to activate a service, this embodiment can greatly shorten the service activating time and improve the efficiency of activating service.

### Third Embodiment

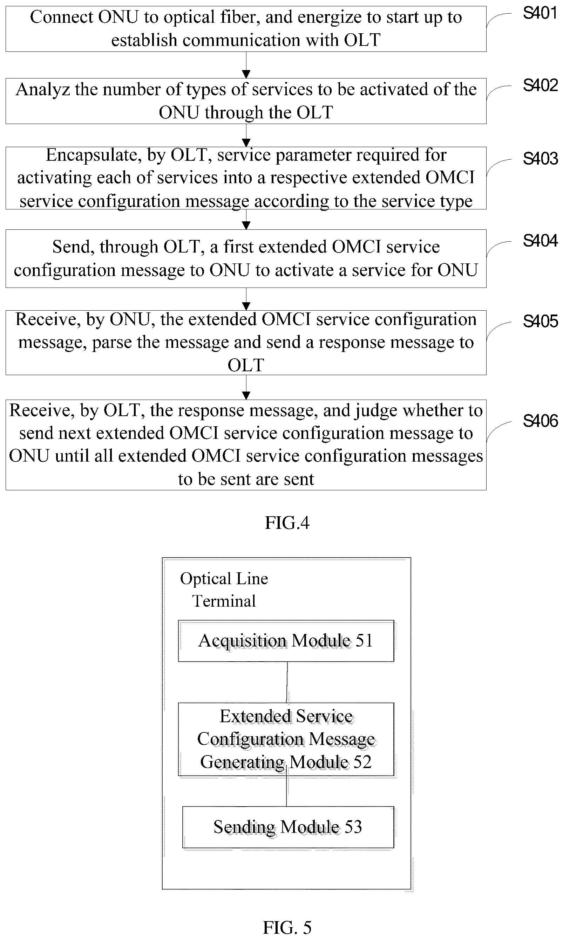

In order to improve the service activating efficiency, this embodiment provides a service activating method. In the service activating method according to this embodiment, the OLT will encapsulate service parameters required for each of services to be activated into a respective extended service configuration message according to a type of the service to be activated. The extended service configuration message may be an extended OMCI service configuration message, and the extended OMCI messages may be sent to the ONU in an order to activate the service. With reference to FIG. 4, the method specifically includes:

Step S401, connecting the optical network unit to an optical fiber, and energizing to start up to establish communication with the optical line terminal.

Specifically, when the ONU needs to activate a service, it is necessary to establish the communication with the OLT. In other words, the ONU is first connected to its corresponding optical fiber, and then energized to interact with the OLT via the optical fiber and establish communication. Further, on the basis of the establishment of communication, an OMCI channel may be established with the OLT to transmit the extended OMCI service configuration message or transmit the identification information of the ONU or other messages.

Step S402, analyzing the number of types of services to be activated of the optical network unit through the optical line terminal.

Specifically, the OLT acquires the to-be-activated service of the ONU on the basis of establishing communication with the ONU. For example, the OLT determines the service to be activated through the identification information of the ONU and then analyzes the types of services to be activated, so as to encapsulate the service parameters according to the respective service type.

Step S403: encapsulating, by the OLT, the service parameters required for activating each of services into a respective extended OMCI service configuration message according to the service type.

Specifically, in order to simplify the activation logic of the service, to shorten the service activating time and to improve the service activating efficiency, all the service parameters required for activating a service may be encapsulated in an extended OMCI service configuration message. If there are N types of services to be activated, the OLT will convert the N types of services to be activated into N extended OMCI service configuration messages including service parameters. In contrary, in the related art, the service parameters of a service are encapsulated in multiple OMCI messages which are sent to the ONU one by one, such that the ONU acquires the complete service parameters of a service, thereby consuming a lot of time to complete the service activating. Further, the service parameter may include: Service-type, which is a service type, such as a unicast, a multicast, an IGMP (Internet Group Management Protocol); Port, which is port information; Vlan, which is tag information of processed packet, and which may include information such as inner and outer priorities and VLAN ID of an inbound packet, and the inner and outer priorities and VLAN ID of an outbound packet; Gemport, which is logical channel identifier and which may include information such as a gemport id; T-cont, which is a bandwidth allocation information parameter which may include a T-cont ID and an Alloc-ID corresponding thereto; and QoS traffic scheduling information. Besides, further parameter information may be selected as required.

Step S404, sending, through the OLT, a first extended OMCI service configuration message to the ONU to activate a service for the ONU.

Specifically, after the OLT generates the extended OMCI service configuration message for activating the ONU service, the extended OMCI service configuration message is sent to the ONU to activate the service to be activated of the ONU. Since the extended OMCI service configuration message includes all the service parameters required to activate a service, the ONU can activate the service according to the extended OMCI service configuration message upon the receipt of the extended OMCI service configuration message.

Step S405, receiving, by the ONU, the extended OMCI service configuration message, parsing the message, and sending a response message to the OLT.

Specifically, upon the receipt of the extended OMCI service configuration message, the ONU first verify whether the extended OMCI service configuration message is correct or can be used for service activating. If the extended OMCI service configuration message is correct or can be used for the service activating after the verification, the response message will be sent to the OLT to acquire the next extended OMCI service configuration message. Then, as an alternative, the extended OMCI service configuration message may be further parsed while the response message is being sent, so as to activate a corresponding to-be-activated service according to the service parameters.

Step S406, receiving, by the OLT, the response message, and judging whether to send the next extended OMCI service configuration message to the ONU until all the extended OMCI service configuration messages to be sent are sent.

Specifically, the OLT receives the response message, indicating that the extended OMCI service configuration message sent previously is used for service activating, and further judging whether there is still a service to be activated or an extended OMCI service configuration message to be sent. If yes, an extended OMCI service configuration message of the next to-be-activated service will be sent to the ONU to continue the service activating.

The service activating method according to the embodiment of the present disclosure can encapsulate all the service parameters required for activating each of services in an extended OMCI service configuration message and send it to the ONU, such that the ONU can activate a service according to the extended OMCI service configuration message, thereby shortening the service activating time and improving the efficiency of service activating.

### Fourth Embodiment

In order to improve the efficiency of service activating, this embodiment provides an optical line terminal, with reference to FIG. 5, including: an acquisition module 51, an extended service configuration message generating module 52, and a sending module 53. The acquisition module 51 is configured to acquire at least one service to be activated of an optical network unit; the extended service configuration message generating module 52 is configured to encapsulate service parameter corresponding to the at least one service to be activated into an extended service configuration message; and the sending module 53 is configured to send the extended service configuration message to the optical network unit.

In a specific implementation, the acquisition module 51 is configured to determine the type of the service to be activated for a user when the user needs to activate the service. In other words, the service to be activated of the ONU corresponding to the user is necessarily acquired at first, so as to configure corresponding service parameters for the service to be activated of the ONU.

In a specific implementation, the acquisition module 51 is configured to establish communication with the optical network unit; acquire identification information of the optical network unit based on the communication; and determine the to-be-activated service of the optical network unit according to the identification information.

In a specific implementation, the to-be-activated service of the optical network unit may be acquired by the acquisition module 51 in such a way that the OLT first establishes communication with the ONU, then sends an acquisition request to the ONU to actively acquire the identification information of the ONU from the ONU or may receive the identification information actively sent from the ONU to determine the to-be-activated service of the ONU according to the identification information. The identification information may be SN information and MAC address information of the ONU, or may be other feature information of the ONU; the service may be a video telephone service, a television service, or the like. In addition, during the acquisition of the to-be-activated service of the optical network unit, a network management operator at the OLT side may determine the to-be-activated service of the ONU corresponding to the user according to the user information. In addition to the above means, the OLT may acquire the information of the to-be-activated service of the ONU in other manners which is not limited in this embodiment. In addition, the establishment of communication between the OLT and the ONU may further include establishing an OMCI channel therebetween, and the OLT may communicate with the ONU through the OMCI channel to acquire the identification information of the ONU. As a matter of course, the identification information may also be acquired through other channels. The OMCI channel may also be used for the subsequent transmission of the extended service configuration message which is an extended OMCI service configuration message.

In the related art, during the activation of the service, the OLT divides the service parameters of the service into multiple OMCI messages and sends them to the ONU successively, and the OLT must send the next OMCI message to the ONU upon the receipt of the response message from the ONU. If the response message is not received, the next OMCI message will not be sent. Thus, the service activating time is prolonged, and the service parameters of the service are sent to the ONU multiple times. After it is received by the ONU, all the service parameters are required to complete the service. In this way, the service activating logic becomes complicated. Therefore, in order to improve the service activating efficiency and simplify the service activating process, according to the optical line terminal in this embodiment, the extended service configuration message generating module 52 can encapsulate all the service parameters of the at least one of the to-be-activated services into a piece of extended service configuration message to be sent to the ONU, such that the ONU can acquire all the service parameters required for activating at least one of the services at a time and then perform the corresponding service configuration to activate the service. In this way, the activating time of the service can be greatly shortened to improve the efficiency of the activating the service. In addition, the extended service configuration message is an Extended OMCI message. Compared to the service parameters transmitted through the basic OMCI message in the related art, since the service parameters according to this embodiment occupy a number of bytes, the service parameters according to this embodiment may be transmitted through the Extended OMCI message supporting an ultra-long format. In other words, all service parameters of at least one service are carried in the Extended OMCI message and transmitted through the Extended OMCI message, such that the OLT can send the extended service configuration message including all the service parameters of at least one service to be activated to the ONU.

In a specific implementation, the extended service configuration message generating module 52 is further configured to package and encapsulate the service parameters required to activate at least one of services to be activated in an extended service configuration message; or generate a service configuration message according to the service parameters corresponding to the service to be activated, and then package and encapsulate the service configuration message required to activate at least one of services to be activated in the extended service configuration message.

In a specific implementation, for a to-be-activated service corresponding to one or more service parameters, the service parameters of the to-be-activated service are encapsulated into an extended service configuration message, wherein all the service parameters required for the to-be-activated service may are directly packaged and encapsulated in an extended service configuration message. The service parameter may include a service type identifier, port information, service label information, a logical channel identifier, bandwidth allocation parameter, and the traffic scheduling information, for example. In addition, for a to-be-activated service, the service parameters thereof may be formed into a plurality of basic OMCI messages, and then all basic OMCI messages of the service are successively packaged and encapsulated in an extended service configuration message, which is an extended OMCI service configuration message.

In a specific implementation, the extended service configuration message generating module 52 is further configured to analyze the service type of the service to be activated; and in accordance with the service type, encapsulate the service parameters corresponding to the service to be activated into at least one of extended service configuration messages according to a preset rule. In other words, all the service parameters of the to-be-activated service may be encapsulated into an extended service configuration message; or all the service parameters of the two or more to-be-activated services may be encapsulated into an extended service configuration message in accordance with the service type.

Specifically, the extended service configuration message may include the configuration information of only one to-be-activated service, or may include the service parameters of two or more to-be-activated service, which may be determined according to the number of services to be activated and the bytes occupied by the service parameters corresponding to each service to be activated. For example, if there are a plenty of service parameters of a to-be-activated service, that is, if the large number of bytes are occupied by the service, all the service parameters of the service can be carried only in an extended service configuration message; and if there are less service parameters in the service to be activated with less bytes occupied by the service or some services having relevance are activated, all the service parameters of the services can be carried in an extended service configuration message. When an extended service configuration message contains service parameters of multiple services, the service parameters may be encapsulated according to the service type. In other words, the service parameters of two or more services may be placed in an extension field according to the service type. In addition, the service parameters are encapsulated in the extended OMCI service configuration message, and specifically may be encapsulated in a Message contents domain of the extended OMCI service configuration message.

The sending module 53 is configured to send the extended service configuration message to the optical network unit to activate the service to be activated by the ONU, upon generation of the extended service configuration message for activating the service of the ONU.

In a specific implementation, the sending module 53 is further configured to send the extended service configuration message to the optical network unit, and specifically, to send a first extended service configuration message to the optical network unit, and send a second extended service configuration message to the optical network unit after a response message to the first extended service configuration message returned from the optical network unit is received.

Specifically, the first extended service configuration information and the second extended service message used herein refer to the extended service configuration messages having an order of sending time. That is, the extended service configuration message initially sent is the first extended service configuration information and the extended service configuration message lastly sent is the second extended service message, wherein the first extended service configuration information and the second extended service message may be only a single extended service configuration message, or may be two or more extended service configuration messages. When the OLT sends the extended service configuration message to the ONU, the extended service configuration messages may be sent to the ONU one by one according to the generation timing of the extended service configuration messages or the logical relationship between the services to be activated. Alternatively, the extended service configuration messages of associated services to be activated may be sent to the ONU together, such that the ONU can activate the service more conveniently and quickly. It is to be understood that after the first piece of extended service configuration message or the first batch of extended service configuration messages are sent, in order to avoid the error of the extended service configuration message and thus affect the subsequent service activating, the OLT will send the next or next batch of the extended service configuration message once it receives the response message sent from the ONU to ensure that the extended service configuration message previously sent is allowed appropriately to activate the service. This process could be repeated until the extended service configuration messages corresponding to all the to-be-activated services are sent, so as to guarantee the normal activation of the service and the stability of the system. In addition, the OLT may also send the extended service configuration message corresponding to all the to-be-activated services of the ONU to the ONU to complete the transmission of the service parameters of the ONU at one time. Then the OLT receives the response message returned from the ONU in relation to the completion of the receipt of the extended service configuration message, such that subsequently the ONU is allow to successively activate services according to the received extended service configuration messages, thereby greatly lowering the transmission time of the extended service configuration messages and improving the service activating efficiency.

The optical line terminal according to the embodiment of the present disclosure can acquire at least one service to be activated of an optical network unit; encapsulate service parameter corresponding to the at least one service to be activated into an extended service configuration message; and send the extended service configuration message to the optical network unit. In other words, all the service parameters required for activating at least one of services to be activated are encapsulated in the extended service configuration message to be sent to the optical network unit to activate the service, such that the optical network unit can complete the activation of at least one service according to one piece of extended service configuration message. Compared to the service activation in the related art in which the service parameters of a service are divided into multiple messages and sent to the optical network unit to activate the service such that the service activating time is prolonged while the efficiency is lowered, this embodiment can shorten the service activating time and improve the efficiency of activating service.

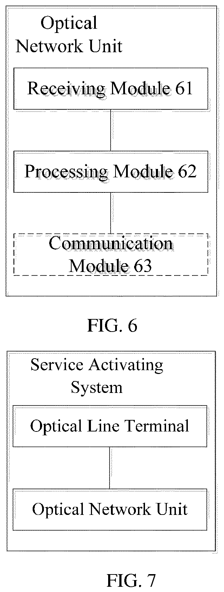

In order to improve service activating efficiency, the embodiment further provides an optical network unit, with reference to FIG. 6, including a receiving module 61 and a processing module 62. The receiving module 61 is configured to receive an extended service configuration message sent from an optical line terminal, wherein the extended service configuration message is a message formed by encapsulating service parameter corresponding to at least one service to be activated by the optical line terminal; and the processing module 62 is configured to parse the extended service configuration message, and configure the service according to the extended service configuration message.

In a specific implementation, the receiving module 61 is configured such that OLT may send the extended service configuration message to the ONU after the generation of the extended service configuration message, and the ONU may receive the extended service configuration message sent from the OLT. The extended service configuration message includes all the service parameters of at least one of the to-be-activated services. In other words, the ONU may acquire the extended service configuration message required for activating at least one service to be activated at a time, and then may activate at least one service according to the extended service configuration message, thereby greatly shortening the service activating time and improves the efficiency of activating service. In addition, compared to the service parameters transmitted through the basic OMCI message in the related art, since the service parameters according to this embodiment occupy a number of bytes, the service parameters according to this embodiment may be transmitted through the Extended OMCI message supporting an ultra-long format. In other words, all service parameters of at least one service are carried in the Extended OMCI message and transmitted through the Extended OMCI message, such that the OLT can send the extended service configuration message including all the service parameters of at least one service to be activated to the ONU.

It should be understood that upon the receipt of each of the extended service configuration messages, the ONU needs to perform a preliminary verification to determine whether it is correct or can be used for service activating. If the verification passes, the ONU may send the response message to the OLT such that the OLT is informed to send the next or next batch of extended service configuration messages. This ensures that when the extended service configuration message is incorrect or cannot be used for service activating, the OLT does not continuously send the extended service configuration messages to avoid waste of the extended service configuration message and communication resources or a problem of unstable system.

In a specific implementation, with reference to FIG. 6, the optical network unit in this embodiment further includes a communication module 63 configured to establish communication with the optical line terminal and report its identification information to the optical line terminal, before the receiving module 61 receives the extended service configuration message sent from the optical line terminal.

Specifically, prior to the receipt of the extended service configuration message sent from the OLT, the ONU needs to establish communication with the OLT, and then report the identification information thereof to the OLT based on the communication. The identification information may be reported to the OLT upon the receipt of the acquisition request from the OLT, or may be directly reported to the OLT after the communication is established in order for the OLT to determine the service to be activated. In addition, the establishment of communication between the OLT and the ONU may further include establishing an OMCI channel therebetween, such that the ONU may communicate with the OLT through the OMCI channel to transmit the identification information. As a matter of course, the identification information may also be transmitted through other channels. The OMCI channel may also be used for the subsequent transmission of the extended service configuration messages.

In a specific implementation, after the ONU receives the extended service configuration message, the processing module 62 verifies and parses the extended service configuration message. In other words, if the extended service configuration message is correct or can be used for the service activating after the verification, the extended service configuration message will be further parsed to activate a corresponding to-be-activated service according to the service parameters.

The optical network unit according to this embodiment can receive an extended service configuration message sent from an OLT, wherein the extended service configuration message includes all the service parameters required for activating at least one service to be activated; and parse the extended service configuration message and activate a corresponding service according to the extended service configuration message. In other words, the ONU can at least acquire all the extended service configuration messages required for activating one of services to be activated at one time and then activate the service through the extended service configuration messages. Compared to the service activation in the related art in which the service configuration messages are necessarily acquired many times to activate a service, this embodiment can greatly shorten the service activating time and improve the efficiency of activating service.

An embodiment further provides a service activating system, with reference to FIG. 7, specifically including the optical line terminal and the optical network unit as set forth. The service activating system according to this embodiment, based on the optical line terminal and the optical network unit, can greatly shorten the service activating time and improve the efficiency of activating service.

In a practical application, the acquisition module 51, the extended service configuration message generating module 52, and the sending module 53 may all be implemented for example by a central processing unit (CPU), a microprocessor unit (MPU), and a digital signal processor (DSP) or a field programmable gate array (FPGA), located in the optical line terminal.

In a practical application, the receiving module 61, the processing module 62 and the communication module 63 can all be implemented for example by a CPU, an MPU, a DSP or an FPGA located in the optical network unit.

Accordingly, an embodiment of the present disclosure further provides a computer storage medium in which a computer program is stored, the computer program being used to execute the service activating method according to the embodiments of the present disclosure.

An embodiment of the present disclosure also provides an optical line terminal, including: a processor and a memory for storing a computer program executable on the processor, wherein the processor is configured to execute the steps of the above methods when the computer program is operated.

An embodiment of the present disclosure also provide an optical network unit, including: a processor and a memory for storing a computer program executable on the processor, wherein the processor is configured to execute the steps of the above methods when the computer program is operated.

Those skilled in the art will appreciate that embodiments of the present disclosure can be formed as a method, system, or computer program product. Accordingly, the present disclosure can employ a form of a hardware embodiment, a software embodiment, or a combination of software and hardware. Moreover, the disclosure can employ a form of a computer program product embodied as one or more computer usable storage media (including but not limited to disk storage and optical storage, etc.) including computer usable program code.

The present disclosure is described with reference to flowchart and/or block diagrams of method, apparatus (system), and computer program product according to embodiments of the disclosure. It will be understood that each one of the flowcharts and/or block diagrams and the combination of the flows and/or blocks in the flowchart and/or block diagrams can be implemented by the computer program instructions. These computer program instructions can be provided to a processor of a general-purpose computer, special-purpose computer, embedded processing device, or other programmable data processing device to produce a machine, such that the instructions executed by the processor of a computer or other programmable data processing device can implement a means for the function specified in one or more flows of the flowchart or in one or more blocks of the block diagram.

These computer program instructions may also be stored in a computer readable memory that can boot a computer or other programmable data processing device to operate in a particular manner, such that instructions stored in the computer readable memory produce an article including the instruction means. The instruction means implements the function specified in one or more flows of the flowchart or in one or more blocks of the block diagram.

These computer program instructions can also be loaded onto a computer or other programmable data processing device such that a series of operational steps are performed on a computer or other programmable device to produce computer-implemented processing, such that the instructions executed on the computer or other programmable device can provide steps for implementing the function specified in one or more flows of the flowchart or in one or more blocks of the block diagram.

The above is further detailed description of the embodiments of the present disclosure in conjunction with the specific implementations, and the specific embodiments of the present disclosure are not limited to the description. It will be apparent to those skilled in the art that the present disclosure may be practiced without departing from the spirit and scope of the invention.

### INDUSTRIAL APPLICABILITY

An embodiment of the present disclosure provides a service activating method, in which an optical line terminal acquires at least one of to-be-activated services of an optical network unit, encapsulates service parameters corresponding to the at least one of to-be-activated services into an extended service configuration message, and sends the extended service configuration message to the optical network unit; and the optical network unit completes the activation of at least one of service according to the extended service configuration message. Therefore, the service activating time can be shortened, and the service activating efficiency can be improved.

## Claims

1. A service activating method, comprising:
acquiring at least one service to be activated of an optical network unit;
encapsulating service parameter corresponding to the at least one service to be activated into an extended service configuration message; and
sending the extended service configuration message to the optical network unit.

2. The service activating method according to claim 1, wherein the step of acquiring at least one service to be activated of an optical network unit comprises:
establishing communication with the optical network unit;
acquiring identification information of the optical network unit; and
determining the service to be activated of the optical network unit according to the identification information.

3. The service activating method according to claim 1 or 2, wherein the step of encapsulating service parameter corresponding to the at least one service to be activated into an extended service configuration message, comprises:
encapsulating the service parameter corresponding to the service to be activated in the extended service configuration message; or
generating a service configuration message according to the service parameter corresponding to the service to be activated, and then encapsulating the service configuration message corresponding to the service to be activated in the extended service configuration message.

4. The service activating method according to claim 1 or 2, wherein the step of encapsulating service parameter corresponding to the at least one service to be activated into an extended service configuration message, comprises:
analyzing a service type of the at least one service to be activated; and
encapsulating, in accordance with the service type, the service parameter corresponding to the at least one service to be activated into the extended service configuration messages according to a preset rule.

5. The service activating method according to claim 1 or 2, wherein the step of sending the extended service configuration message to the optical network unit, comprises:
sending a first extended service configuration message to the optical network unit, and
sending a second extended service configuration message to the optical network unit after a response message to the first extended service configuration message returned from the optical network unit is received.

6. A service activating method, comprising:
receiving an extended service configuration message sent from an optical line terminal, wherein the extended service configuration message is a message formed by encapsulating service parameter corresponding to at least one service to be activated by the optical line terminal; and
parsing the extended service configuration message, and activating a corresponding service according to the extended service configuration message.

7. The service activating method according to claim 6, wherein before the step of receiving an extended service configuration message sent from an optical line terminal, the method further comprises:
establishing communication with the optical line terminal, and reporting identification information to the optical line terminal.

8. An optical line terminal, comprising:
an acquisition module, configured to acquire at least one service to be activated of an optical network unit;
an extended service configuration message generating module, configured to encapsulate service parameter corresponding to the at least one service to be activated into an extended service configuration message; and
a sending module, configured to send the extended service configuration message to the optical network unit.

9. An optical network unit, comprising:
a receiving module, configured to receive an extended service configuration message sent from an optical line terminal, wherein the extended service configuration message is a message formed by encapsulating service parameter corresponding to at least one service to be activated by the optical line terminal; and
a processing module, configured to parse the extended service configuration message, and configure the service according to the extended service configuration message.

10. A service activating system, comprising the optical line terminal according to claim 8 and the optical network unit according to claim 9.

11. A computer storage medium in which a computer executable instruction is stored, the computer executable instruction being configured to execute the service activating method according to any one of claims 1-5.

12. A computer storage medium in which a computer executable instruction is stored, the computer executable instruction being configured to execute the service activating method according to claim 6 or 7.

13. An optical line terminal, comprising: a processor and a memory for storing a computer program executable on the processor, wherein
the processor is configured to execute the steps of the method according to any one of claims 1-5 when the computer program is operated.

14. An optical network unit, comprising: a processor and a memory for storing a computer program executable on the processor, wherein
the processor is configured to execute the steps of the method according to claim 6 or 7 when the computer program is operated.
